Europäisches Patentamt

European Patent Office

Office européen des brevets

(11) Publication number: **0 277 976 B1**

# EUROPEAN PATENT SPECIFICATION

(45) Date of publication of patent specification: 30.09.92    (51) Int. Cl.⁵: **B60P 1/50**, B66F 9/14

(21) Application number: **87905126.6**

(22) Date of filing: **27.07.87**

(86) International application number:
**PCT/US87/01800**

(87) International publication number:
**WO 88/00894 (11.02.88 88/04)**

(54) MOTORIZED OPERATOR UNIT FOR MANUALLY ADJUSTABLE FORK MECHANISM.

(30) Priority: **01.08.86 US 891635**

(43) Date of publication of application:
**17.08.88 Bulletin  88/33**

(45) Publication of the grant of the patent:
**30.09.92 Bulletin  92/40**

(84) Designated Contracting States:
**DE GB IT**

(56) References cited:
| | |
|---|---|
| DE-A- 2 726 147 | US-A- 2 339 120 |
| US-A- 2 451 943 | US-A- 2 483 745 |
| US-A- 3 224 328 | US-A- 3 974 927 |
| US-A- 4 239 446 | US-A- 4 280 781 |
| US-A- 4 381 166 | US-A- 4 607 997 |

(73) Proprietor: **SMART, Robert L.**
**11670 Fields Road**
**New Carlisle, OH 45344(US)**

(72) Inventor: **SMART, Robert L.**
**11670 Fields Road**
**New Carlisle, OH 45344(US)**

(74) Representative: **Warren, Anthony Robert et al**
**BARON & WARREN, 18 South End, Kensington**
**London W8 5BU(GB)**

EP 0 277 976 B1

## Description

Conventional fork lift mechanisms of tractors or the like are provided with forks which are in spaced-apart relationship. The spacing between the forms in the mechanism is manually adjustable.

It is an object of this invention to provide a motorized operator unit which may be easily and readily attached permanently or temporarily to such a conventional fork mechanism so that the forks of the mechanism are adjustable by means of the operator unit. Thus, the forks of the mechanism can be operatively adjusted as desired to engage an object at the underside thereof or to grasp an object at opposite portions thereof, for lifting the object.

The present invention is directed to apparatus generally of the type disclosed in US-A-4,381,166, issued to the present inventor, as defined in the preamble to appended claim 1.

More particularly, the apparatus disclosed in US-A-4,381,166 comprises a carriage which includes motorized apparatus permanently mounted within the carriage and connected to the forks for adjustment of the forks which are carried by the carriage. The carriage is fixedly attached to hoist apparatus of an industrial tractor, or other vehicle or the like. Thus, the tractor has a carriage in which the forks are adapted to be adjusted by motor means, and the carriage has a motor mechanism therewithin for operation of the forks.

However, this apparatus is not applicable to the earlier mentioned conventional fork lift mechanisms incorporating manually adjustable forks.

The present invention consists in motorized operator unit as defined in the characterising clause of claim 1.

The motorized operator unit embodying this invention and in particular its support structure, is easily and readily attachable and detachable as a module to a carriage which has manually adjustable forks. Thus, the forks are adjustable by motor operation.

Rotatably carried by the support structure are a plurality of rotatable threaded rods. Mounted upon each threaded rod are a plurality of nuts. A plurality of retainer members are attached to the nuts. Each retainer member is attached to a nut of each of the threaded rods. Thus, the nuts cannot rotate, but the nuts travel along the threaded rods with rotation of the threaded rods. Thus nuts carry therewith the retainer members. A motor is operably joined to the threaded rods for rotation thereof. The motor is preferably a fluid operated motor.

The support structure is adapted to be readily mounted upon or within a carriage having conventional manually adjustable forks. Each retainer member is adapted to retain a fork of the fork mechanism. Thus, the motorized operator unit embodying this invention adjustably moves the forks upon the carriage with operation of the motor.

The invention will now be described with reference to the accompanying drawings, in which:-

FIG. 1 is a perspective exploded view showing a tractor provided with a carriage having fork mechanism which is manually adjustable. This figure also illustrates the manner in which an operator unit embodying this invention is readily attached to the fork mechanism for motor adjustment of the forks.

FIG. 2 is a perspective view, drawn on a larger scale than FIG. 1, showing the operator unit.

FIG. 3 is a perspective view, drawn on a slightly smaller scale than FIG. 1, showing the operator unit attached to the carriage and fork mechanism shown in FIG. 1 for motor operation of the forks.

FIG. 4 is a perspective exploded view, drawn on substantially the same scale as FIG 2, of the operator unit.

FIG. 5 is an enlarged elevational view taken substantially on line 5-5 of FIG. 3.

FIG. 6 is an enlarged sectional view taken substantially on line 6-6 of FIG. 4.

FIG. 7 is an enlarged sectional view taken substantially on line 7-7 of FIG. 4.

FIG. 8 is a fragmentary sectional view taken substantially on line 8-8 of FIG. 6.

FIG. 9 is an exploded view drawn on substantially the same scale as FIG. 2, illustrating the manner of attachment of an operator unit embodying this invention to a carriage which is different from the carriage shown in FIGS. 1 and 3.

FIG. 10 is an enlarged sectional view taken substantially on line 10-10 of FIG. 9.

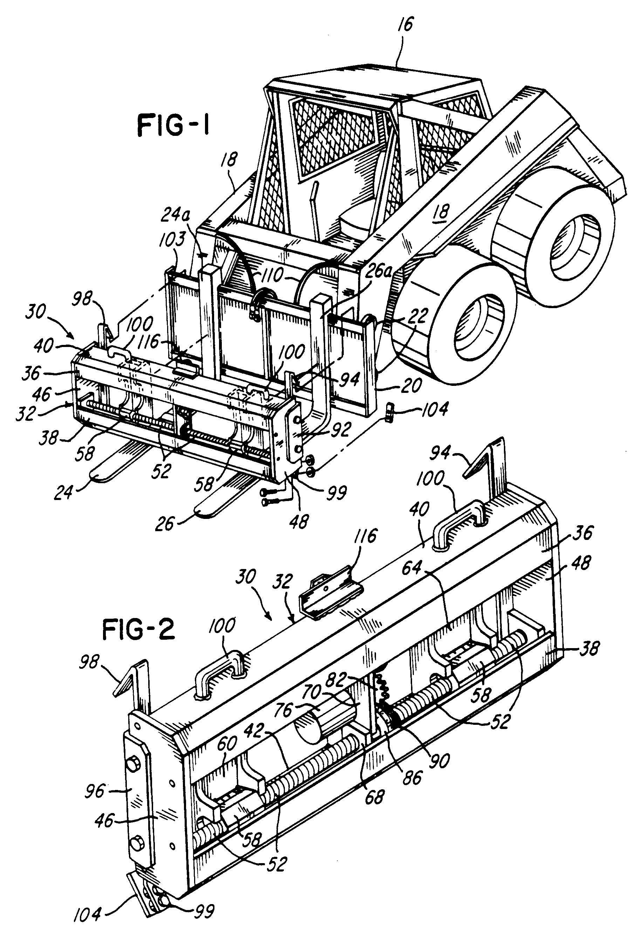

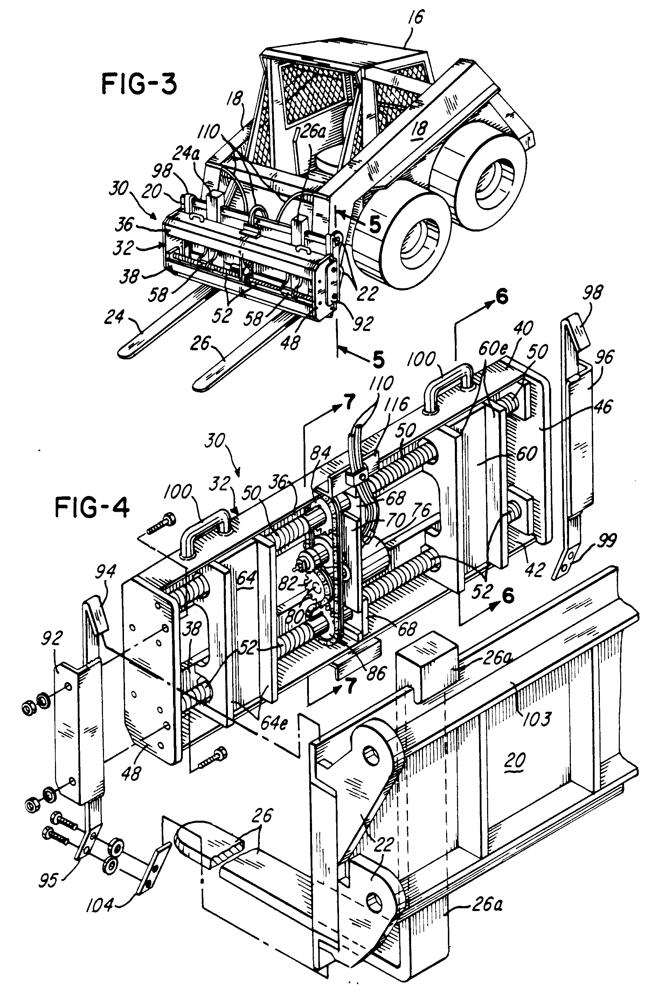

FIGS. 1 and 3 illustrate a tractor 16, which is provided with extending support arms 18. The arms 18 are pivotally movable to raise and to lower the front portions of the arms 18. A carriage 20 is attached to the front portions of the arms 18 by means of lugs 22. Mounted upon the carriage 20 are forks 24 and 26. The fork 24 has an upwardly extending part 24a which is supported by the upper part of the carriage 20. The fork 26 has an upwardly extending part 26a which is supported by the upper part of the carriage 20. The forks 24 and 26 are adapted to be manually adjusted upon the carriage 20.

A motorized, fork operator unit 30 embodying this invention comprises support structure 32. The support structure 32 is provided with front wall members 36 and 38, an upper frame member 40 and a lower frame member 42. Attached to the front wall members 36 and 38 and to the upper and lower frame members 40 and 42 are end frame members 46 and 48. Rotatably supported by the end frame members 46 and 48 and extending therebetween are threaded rods 50 and 52.

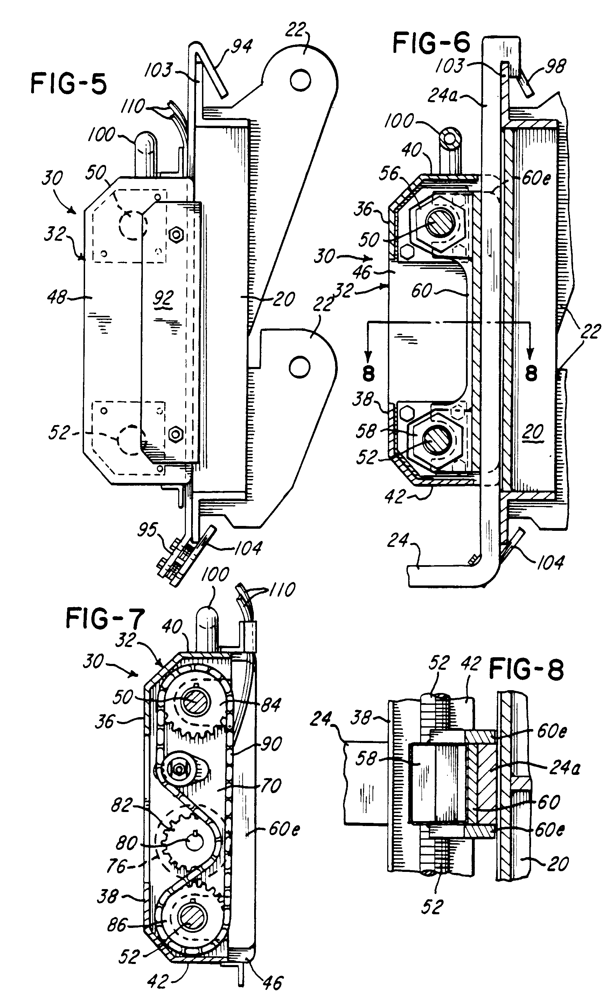

Encompassing the threaded rod 50 and threadedly attached thereto are nuts 56, which are normally positioned in spaced-apart relationship. Encompassing the threaded rod 52 and threadedly attached thereto are nuts 58, which are also positioned in spaced-apart relationship. A retainer 60 closely encompasses and is attached to one of the nuts 56 on the threaded rod 50, and the retainer 60 also encompasses and is attached to a nut 58 on the threaded rod 52, as best shown in FIG. 6. A retainer 64 closely encompasses and is attached to the other nut 56 on the threaded rod 50, and the retainer 64 also encompasses and is attached to the other nut 58 on the threaded rod 52. The retainer 60 has spaced-apart vertically extending engagement portions 60e. The retainer 64 has spaced-apart engagement portions 64e. The retainers 60 and 64 maintain the nuts 56 and 58 against rotation. However, the nuts 56 and 58 move along the threaded rods 50 and 52 with rotation thereof.

The threaded rods 50 and 52 are rotatably supported at the midportions thereof by bearing members 68, which are attached to a support member 70. The support member 70 is attached to the front walls 36 and 38 and to the upper and lower frame members 40 and 42. The support member 70 supports a rotary motor 76, which is shown herein as being a fluid operated motor.

Preferably, the threaded rods 50 and 52 have threads in a clockwise direction between the intermediate support members 70 and the end frame member 46, and the threaded rods 50 and 52 have threads in a counterclockwise direction between the intermediate support member 70 and the end frame member 48. Thus, the nuts 56 and 58 which are attached to the clockwise threads and the nuts 56 and 58 which are attached to the counterclockwise threads move in opposite directions with rotation of the threaded rods 50 and 52.

The motor 76 has a shaft 80 extending therefrom and through the intermediate support member 70. Attached to the shaft 80 for rotation therewith is a toothed wheel 82. Attached to the threaded rod 50, is a toothed wheel 84. Attached to the threaded rod 52 is a toothed wheel 86. Encompassing the toothed wheels 84 and 86 and in meshed relationship therewith and in meshed relationship with the toothed wheel 82 is a drive chain 90, as best shown in FIG. 7.

A bracket 92 is attached to the end frame member 48 and has a hook member 94 secured thereto and extending upwardly therefrom. Attached to the bracket 92 and extending downwardly therefrom is a connector member 95. A bracket 96 is attached to the end frame member 46 and has a hook member 98 secured thereto and extending upwardly therefrom. Attached to the bracket 96 and extending downwardly therefrom is a connector member 99. Handle members 100 are attached to the upper frame member 40.

Operation

As illustrated in FIG. 1, the fork operator unit 30 is adapted to be positioned upon the carriage 20. The fork operator unit 30 is adapted to be lifted manually by means of the handles 100 and moved to the carriage 20. The hook members 94 and 98 are hooked over a cross member 103 at the upper part of the carriage 20, and the connector members 95 and 99 are clamped by means of clamps 104 to the lower part of the carriage 20, as best shown in FIG. 5.

As the fork operator unit 30 is moved to the carriage 20, the engagement portions 60e of the retainer 60 are positioned at the sides of the upwardly extending part 24a of the fork 24, and the engagement portions 64e of the retainer 64 are positioned at the sides of the upwardly extending part 26a of the fork 26. Thus, the retainer members 60 and 64 partially encompass the upwardly extending portions 24a and 26a of the forks 24 and 26, respectively.

Fluid conduit lines 110, which extend from a fluid pump, not shown, carried by the tractor 16, are adapted to be connected to the motor 76 for operation thereof. If desired, a bracket 116 may be attached to the upper frame member 40 to support a portion of the fluid conduits 110.

Thus, with operation of the motor 76 the retainer members 60 and 64 are moved, and the retainer members 60 and 64 move the forks 24 and 26 with respect to the carriage 20. The arms 18, to which the carriage 20 is attached, move the carriage 20 upwardly and downwardly.

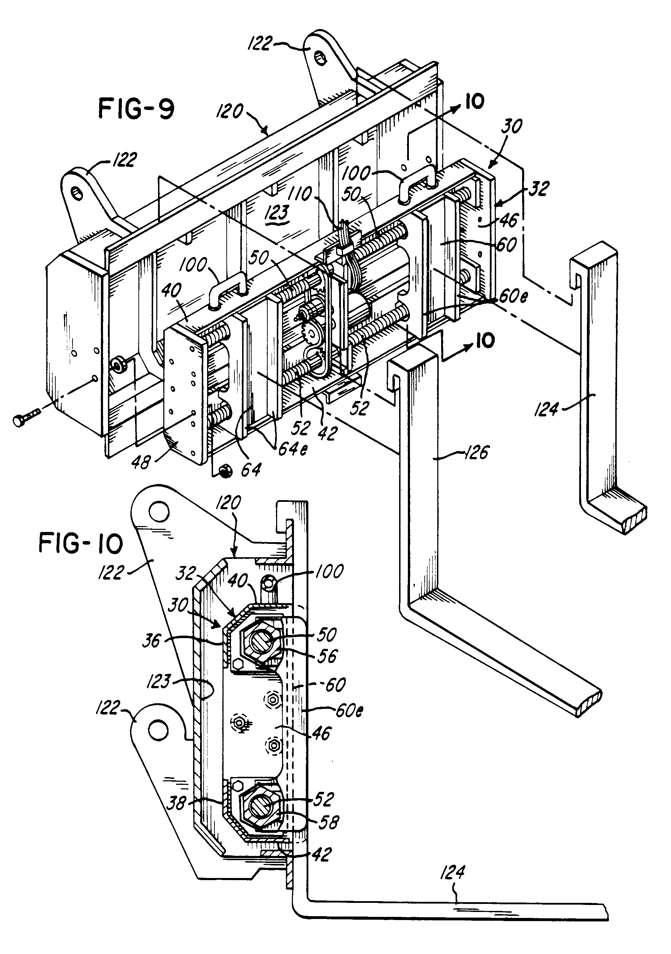

FIGS. 9 and 10 show a carriage 120 adapted to be attached by means of lugs 122 to arms, such as the arms 18 shown in FIGS. 1 and 3. The carriage 120 has a recess 123 therein. FIGS. 9 and 10 illustrate the positioning of a fork operator unit 30 of this invention within the recess 123 of the carriage 120. After the operator unit 30 is positioned within the recess 123, forks 124 and 126 of the carriage 120 are hooked over the upper part of the carriage 120. The forks 124 and 126 are positioned between the engagement parts 60e and 64e of the retainer members 60 and 64 of the operator unit 30. Thus, movement of the retainer members 60 and 64 by operation of the motor 76 moves the forks 124 and 126 with respect to the carriage 120. The arms 18 of the tractor 16 which supports the carriage 120, are adapted to move the carriage 120 upwardly and downwardly.

## Claims

1. A motorized operator unit for a fork mechanism of a machine such as a tractor or the like, the fork mechanism including a carriage (20; 120) which is supported by movable members (18) of the machine, and which supports forks (24, 26; 124, 126) which are adapted to be adjustable, the motorized operator unit including support structure (32), a pair of elongate threaded parallel rods (50, 52) rotatably supported in spaced-apart relationship by the support structure, a motor (70) provided with a rotary drive shaft (80, 82, 84, 86, 90), means (90, 84, 86) connecting the rotary drive shaft of the motor (70) to the elongate threaded rods (50, 52) for rotation thereof, and a pair of retainer members (60, 64), each retainer member (60, 64) being attached to a nut (56) which is threadedly attached to one of the threaded rods (50) and to a nut (58) which is threadedly attached to the other of the threaded rods (52), each retainer member (60, 64) preventing rotation of the nuts (56, 58) to which the retainer member (60, 64) is attached, wherein operation of the motor (70) rotates the threaded rods (50, 52), and the retainer members (60, 64) are moved by the nuts (56, 58) and the forks (24, 26; 124, 126) are moved by the retainer members (60, 64), characterised by the support structure (32), and therefore the motorized operator unit (30), being adapted to be quickly removably attached to a carriage (20; 120) of the type which supports the forks (24, 26; 124, 126) in a manually adjustable manner, with each of the retainer members (60, 64) being engageable with one of the forks (24, 26; 124, 126).

2. The unit claimed in claim 1, which includes hook members (97, 98) attached to the support structure (32) for supporting the support structure (32) upon the carriage (20).

3. The unit claimed in claim 1 or 2, in which each of the threaded rods (50, 52) has a left hand threaded portion and a right hand threaded portion, there being a nut (56, 58) threadedly attached to the left hand threaded portion of each threaded rod (50, 52) and a nut (56, 58) threadedly attached to the right hand threaded portion of each threaded rod (50, 52), one of the retainer members (60, 64) being attached to the nuts (56, 58) attached to the left hand threaded portions of the rods (50, 52), and the other of the retainer members (60, 64) being attached to the nuts (56, 58) attached to the right hand threaded portions of the rods (50, 52).

4. The unit claimed in claim 1, 2 or 3, in which the carriage (120) is provided with a recess (123) and the support structure (32) includes means for positioning the support structure (32) within the recess (123) of the carriage (120) with the retainer members (60, 64) engaging the forks (24, 26) supported by the carriage (120).

## Patentansprüche

1. Motorisierte Betätigungseinheit für einen Gabelmechanismus einer Maschine, zum Beispiel eines Traktors oder dergleichen, wobei der Gabelmechanismus einen Wagen (20;120) einschließt, der durch bewegliche Glieder (18) der Maschine abgestützt ist und der einstellbar ausgebildete Gabelzinken (24,26;124,126) abstützt, wobei die motorisierte Betätigungseinheit einen Tragaufbau (32), ein Paar länglicher paralleler Gewindestangen (50,52), die durch den Tragaufbau mit Abstand voneinander drehbar abgestützt sind, einen Motor (70), der mit einem drehbaren Antriebswellenaufbau (80,82,84,86,90) versehen ist, Mittel (90,84,86), die den Antriebswellenaufbau des Motors (70) mit den länglichen Gewindestangen (50,52) zu deren Rotation verbinden, und ein Paar Aufnahmeglieder (60,64) einschließt, wobei jedes Aufnahmeglied (60,64) an einer Mutter (56), die in Gewindeeingriff mit der einen Gewindestange (50) steht, und an einer Mutter (58), die im Gewindeeingriff mit der anderen Gewindestange (52) steht, befestigt ist, wobei jedes Aufnahmeglied (60,64) die Rotation der Muttern (56,58), an welchen die Aufnahmeglieder (60,64) jeweils befestigt sind, verhindert und wobei der Betrieb des Motors (70) die Gewindestangen (50,52) rotieren läßt, die Aufnahmeglieder (60,64) durch die Muttern (56,58) und die Gabelzinken (24,26;124,126) durch die Aufnahmeglieder bewegt werden, dadurch gekennzeichnet, daß der Tragaufbau (32) und damit die motorisierte Betätigungseinheit (30) angepaßt ist, schnell lösbar an einem Wagen (20;120) von der Art befestigt zu sein, der die Gabelzinken (24,26;124,126) in einer manuell einstellbaren Weise abstützt, wobei jedes der Aufnahmeglieder (60,64) mit einer der Gabelzinken (24,26;124,126) in Eingriff bringbar ist.

2. Betätigungseinheit nach Anspruch 1, die Hakenglieder (97,98) einschließt, die am Tragaufbau (32) zur Abstützung des Tragaufbaus (32) an dem Wagen (20) befestigt ist.

3. Betätigungseinheit nach Anspruch 1 oder 2, bei welcher jede der Gewindestangen (50,52) einen Linksgewindeabschnitt und einen Rechtsgewindeabschnitt aufweist, wobei eine Mutter (56,58), die mit dem Linksgewindeabschnitt jeder Gewindestange (50,52) in Eingriff steht, und eine Mutter (56,58), die mit dem Rechtsgewindeabschnitt jeder Gewindestange (50,52) in Eingriff steht, vorgesehen ist und wobei das eine der Aufnahmeglieder (60,64) an den Muttern (56,58), die mit dem Linksgewindeabschnitt der Gewindestangen (50,52) in Eingriff stehen, und das andere der Aufnahmeglieder (60,64) an den Muttern (56,58), die mit dem Rechtsgewindeabschnitt der Gewindestangen (50,52) in Eingriff stehen, befestigt ist.

4. Betätigungseinheit nach Anspruch 1, 2 oder 3, bei welcher der Wagen (120) mit einem Aufnahmeraum (123) versehen ist und bei welcher der Tragaufbau (32) Mittel zum Positionieren des Tragaufbaus in dem Aufnahmeraum (123) des Wagens (120) einschließt, wobei die Aufnahmeglieder (60,64) mit den vom Wagen (120) abgestützten Gabelzinken (24,26) in Eingriff stehen.

**Revendications**

1. Dispositif motorisé pour mécanisme à fourche d'une machine telle qu'un tracteur ou analogues, le mécanisme à fourche comportant un chariot (20 ; 120) qui est supporté par des éléments mobiles (18) de la machine et qui supporte des fourches (24, 26 ; 124, 126) qui sont prévues pour être réglables, le dispositif motorisé comportant une structure de support (32), une paire de tiges filetées parallèles allongées (50, 52) de manière tournante supportées par la structure de support de manière séparées, un moteur (70) prévu avec un arbre d'entraînement tournant (80, 82, 84, 86, 90), un moyen (90, 84, 86) raccordant l'arbre d'entraînement tournant du moteur (70) aux tiges filetées allongées (50, 52) pour rotation de celles-ci et une paire d'éléments de retenue (60, 64), chaque élément de retenue (60, 64) étant relié à un écrou (56) qui est relié de manière taraudée à une des tiges filetées (50) et à un écrou (58) qui est relié de manière taraudée à l'autre des tiges filetées (52), chaque élément de retenue (60, 64) empêchant la rotation des écrous (56, 58) auxquels l'élément de retenue (64) est fixé, dans lequel l'action du moteur (70) tourne les tiges filetées (50, 52) et les éléments de retenue (60, 64) sont déplacés par les écrous (56, 58) et les fourches (24, 26 ; 124, 126) sont déplacées par les éléments de retenue (60, 64) caractérisé en ce que la structure de support (32) et par suite le dispositif motorisé (30) est prévue pour être fixée rapidement de manière amovible à un chariot (20 ; 120) du type qui supporte les fourches (24, 26 ; 124, 126) d'une manière réglable manuellement, avec chacun des éléments de retenue (60, 64) étant mis en prise avec une des fourches (24, 26 ; 124, 126).

2. Dispositif selon la revendication 1, qui comporte des éléments de crochet (97, 98) fixés à la structure de support (32) pour supporter la structure de support (32) sur le chariot (20).

3. Dispositif selon la revendication 1 ou 2, dans lequel chacune des tiges filetées (50, 52) comporte une partie filetée gauche et une partie filetée droite, celle-ci comportant un écrou (56, 58) relié de manière taraudée à la partie filetée gauche de chaque tige filetée (50, 52) et comportant un écrou (56, 58) relié de manière taraudée à la partie filetée droite de chaque tige filetée (50, 52), un des éléments de retenue (60, 64) étant fixé aux écrous (56, 58) reliés aux parties filetées gauche des tiges (50, 52) et l'autre des éléments de retenue (60, 64) étant fixé aux écrous (56, 58) reliés aux parties filetées droite des tiges (50, 52).

4. Dispositif selon la revendication 1, 2 ou 3, dans lequel le chariot (120) est prévu avec un évidement (123) et la structure de support (32) comporte un moyen pour positionner la structure de support (32) à l'intérieur de l'évidement (123) du chariot (120) avec des éléments de retenue (60, 64) mettant en prise les fourches (24, 26) supportées par le chariot (120).

FIG-1

FIG-2

EP 0 277 976 B1

FIG-3

FIG-4

FIG-5

FIG-6

FIG-7

FIG-8

FIG-9

FIG-10